# EUROPÄISCHE PATENTANMELDUNG

(11) **EP 4 480 884 A1**
(43) Veröffentlichungstag der Anmeldung: **25.12.2024**
(21) Anmeldenummer: 24171899.8
(22) Anmeldetag: 23.04.2024
(51) Int. Cl.: B66C 23/70, A01G 23/081

(54) **ARBEITSFAHRZEUG ZUM FÄLLEN VON BÄUMEN**

(30) Priorität: 21.06.2023 DE 202023103431 U
(71) Anmelder: IMPEX Forstmaschinen GmbH, 94327 Bogen / Furth (DE)
(72) Erfinder: GAILLINGER, Hermann, 84069 Schierling (DE)
(74) Vertreter: advotec.

(57) **Zusammenfassung**

Es wird offenbart ein Arbeitsfahrzeug zum Fällen von Bäumen mit einem Fahrzeughauptkörper (1) sowie einem am Fahrzeughauptkörper (1) schwenkbar befestigten Ausleger (9), wobei der Ausleger (9) einen am Fahrzeughauptkörper (1) befestigten Hauptarm (11) sowie einen am Hauptarm (11) schwenkbar gelagerten Wipparm (12) aufweist, an dessen freiem Ende ein Baumfällwerkzeug (14) angeordnet ist, wobei sowohl der Hauptarm (11) als auch der Wipparm (12) teleskopartig verlängerbar ausgebildet sind.

## Beschreibung

Die vorliegende Erfindung betrifft ein Arbeitsfahrzeug zum Fällen von Bäumen mit einem Fahrzeughauptkörper sowie einem am Fahrzeughauptkörper schwenkbar befestigten Ausleger.

Derartige Arbeitsfahrzeuge sind aus dem Stand der Technik bekannt. Bei der Holzernte werden in der Regel sogenannte Harvester eingesetzt, die auch als Holz-Vollernter bezeichnet werden können. Mit diesen Geräten, die selbstfahrend ausgestaltet sind, ist es möglich, einen Baum zu fällen und abzutransportieren. Bei vielen dieser Geräten ist es auch möglich, den entsprechenden Baum zu entasten und den Stamm in Stücke einer gewünschten Länge zu zerteilen. Diese müssen danach lediglich abgeholt und aus dem Wald transportiert werden.

Die bekannten Arbeitsfahrzeuge verfügen über einen Ausleger mit einem Erntekopf, der sich aus einer Greifvorrichtung zum Erfassen des Stammes, einer Trennvorrichtung und einer Vorschubeinrichtung zusammensetzt. Die Länge der bekannten Ausleger ist so bemessen, dass beiderseits des Fahrzeugs nur wenige Baumreihen erfasst werden können. Durch die limitierte Länge der Ausleger der bekannten Arbeitsfahrzeuge können mit diesen von einem fixen Standort aus nur relativ wenige Bäume, die in der entsprechenden Nähe positioniert sind, gefällt werden. Aus diesem Grunde müssen die bekannten Arbeitsfahrzeuge häufig bewegt werden, um an zu fällende Bäume zu gelangen.

Der vorliegenden Erfindung liegt die Aufgabe zugrunde, ein Arbeitsfahrzeug der eingangs genannten Art zur Verfügung zu stellen, welches die Nachteile der Arbeitsfahrzeuge aus dem Stand der Technik überwindet. Der vorliegenden Erfindung liegt insbesondere die Aufgabe zugrunde, ein Arbeitsfahrzeug zur Verfügung zu stellen, welches über eine verbesserte Reichweite verfügt, um von einem festen Punkt aus möglichst viele Bäume zu erreichen.

Diese Aufgabe wird erfindungsgemäß durch ein Arbeitsfahrzeug der eingangs genannten Art gelöst, wobei der Ausleger einen am Fahrzeughauptkörper befestigten Hauptarm sowie einen am Hauptarm schwenkbar gelagerten Wipparm aufweist, an dessen freiem Ende ein Baumfällwerkzeug angeordnet ist, wobei sowohl der Hauptarm als auch der Wipparm teleskopartig verlängerbar ausgebildet sind.

Durch die Tatsache, dass sowohl der Hauptarm als auch der Wipparm des erfindungsgemäßen Arbeitsfahrzeuges teleskopierbar ausgebildet ist, ist es möglich, ein Arbeitsfahrzeug zur Verfügung zu stellen, welches eine besonders große Reichweite zum Erreichen von Bäumen aufweist.

Bei einer besonders bevorzugten Ausführungsform des erfindungsgemäßen Arbeitsfahrzeuges erstreckt sich der Ausleger im vollständig verlängerten Zustand des Hauptarmes und des Wipparmes über eine Gesamtlänge von mindestens 16 Metern, insbesondere von ca. 20 Metern. Durch einen derart verlängerbaren Ausleger lassen sich von einem fixen Standort aus wesentlich mehr Bäume erreichen, als dies mit den bekannten Baumfällvorrichtungen möglich ist.

In der Regel umfasst das Baumfällwerkzeug eine Baumhaltevorrichtung sowie eine Schneidvorrichtung, wobei die Schneidvorrichtung vorzugsweise unterhalb der Baumhaltevorrichtung angeordnet ist und die Baumhaltevorrichtung vorzugsweise zwei übereinander angeordnete Halteelemente umfasst. Auf diese Art und Weise lassen sich Bäume stehend entnehmen, was gerade bei dicht bewachsenen Gegenden von großem Vorteil ist. So nehmen die gefällten Bäume bei einer stehenden Entnahme den geringstmöglichen Platz beim Heranführen des gefällten Baumes von der Entnahmestelle zum Arbeitsfahrzeug ein.

Bei einer besonders bevorzugten Ausführungsform des erfindungsgemäßen Arbeitsfahrzeuges ist der Hauptarm als Teleskoprohr ausgebildet, welches mindestens zwei Teilröhren umfasst, welche einen unterschiedlichen Durchmesser aufweisen, wobei die Teilröhre mit dem geringeren Durchmesser aus der Teilröhre mit dem größeren Durchmesser ausgefahren sowie in diese Teilröhre eingefahren werden kann. Ein Ausleger mit einem derartigen Hauptarm lässt sich besonders einfach auf unterschiedliche Längen einstellen. Zudem lassen sich besondere große Auslegerlängen realisieren.

Mit Vorteil ist die Teilröhre mit geringerem Durchmesser mittels eines Betätigungselements, insbesondere eines Pneumatik- oder Hydraulikzylinders, vorzugsweise eines Teleskopzylinders bewegbar. Gerade mit einem Teleskopzylinder lassen sich besonders große Längen des Hauptarmes realisieren, da ein solcher Zylinder ebenfalls teleskopierbar ist. Vorzugsweise ist eine Zylinderstange des Betätigungselements an der Innenwand der Teilröhre mit geringerem Durchmesser befestigt und ein Zylinderrohr des Betätigungselements ist vorzugsweise an der Innenwand der Teilröhre mit größerem Durchmesser befestigt. Insbesondere durch einen innenliegenden Teleskopzylinder lassen sich besonders vorteilhaft Hauptarme mit besonders großen Längen realisieren.

Bei einer besonders bevorzugten Ausführungsform des erfindungsgemäßen Arbeitsfahrzeuges ist der Wipparm als Teleskoprohr ausgebildet, welches vorzugsweise eine schwenkbar mit dem Hauptarm verbindbare Aufnahmehülse umfasst, in welche eine axial verschiebbare Gleitröhre mit geringerem Durchmesser aufgenommen ist, wobei die Gleitröhre vorzugsweise länger ausgebildet ist als die Aufnahmehülse. Mit einer derartigen Kombination aus Aufnahmehülse und Gleitröhre lassen sich auch beim Wipparm besonders vorteilhaft große Längen im ausgefahrenen Zustand realisieren.

Mit Vorteil kann die Gleitröhre an beiden Enden der Aufnahmehülse aus dieser hinausgeschoben und in diese hineingeschoben werden.

In der Regel erfolgt eine Bewegung der Gleitröhre mittels eines Betätigungselements, insbesondere mittels eines Hydraulik- und/oder Pneumatikzylinders, welcher vorzugsweise außen an der Gleitröhre und der Aufnahmehülse befestigt ist, wobei vorzugsweise ein Zylinderrohr des Betätigungselements an der Aufnahmehülse und eine Zylinderstange an der Gleitröhre befestigt ist. Mit einem derartigen Betätigungselement ist ein äußerst einfaches und effektives Gleiten der Gleitröhre in der Aufnahmehülse möglich.

Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

In den Zeichnungen zeigen:
- Figur 1:: eine Seitenansicht eines erfindungsgemäßen Fahrzeuges;
- Figur 2:: das Arbeitsfahrzeug gemäß Anspruch 1 mit vollständig ausgefahrenem Ausleger;
- Figur 3:: das Arbeitsfahrzeug gemäß Figur 1 mit abgeknicktem Ausleger;
- Figur 4:: den Ausleger gemäß Arbeitsfahrzeug von Figur 1 mit transparentem Hauptarm; und
- Figur 5:: den Ausleger gemäß Figur 4 im vollständig ausgefahrenen Zustand.

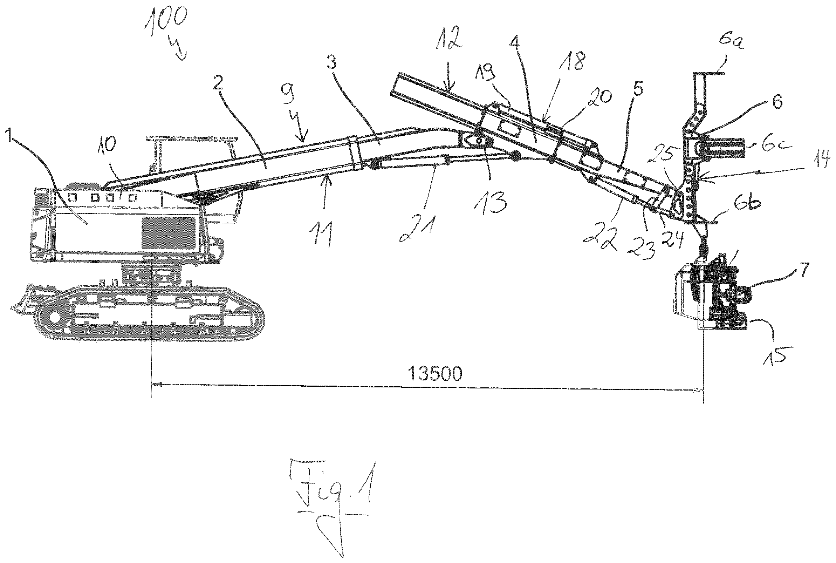

Figur 1 zeigt ein erfindungsgemäßes Arbeitsfahrzeug 100 zum Fällen von Bäumen. Das Arbeitsfahrzeug 100 weist einen raupenförmigen Fahrzeughauptkörper 1 sowie einen Ausleger 9 auf. Der Ausleger 9 ist schwenkbar am Rahmen 10 des Fahrzeughauptkörpers befestigt. Der Ausleger 9 umfasst einen am Rahmen 10 des Fahrzeughauptkörpers 1 befestigten Hauptarm 11 sowie einen am Hauptarm 11 schwenkbar gelagerten Wipparm 12.

Der Wipparm 12 ist um eine senkrecht zur Längsachse des Wipparms angeordnete Schwenkachse 13 schwenkbar. Am freien Ende des Wipparms 12 ist ein Baumfällwerkzeug 14 angeordnet. Das Baumfällwerkzeug 14 umfasst eine Baumhaltevorrichtung 6 sowie eine an einem Aggregat 7 angeordnete Schneidvorrichtung 15. Die Schneidvorrichtung 15 ist unterhalb der Baumhaltevorrichtung 6 angeordnet. Die Baumhaltevorrichtung 6 umfasst drei übereinander angeordnete Halteelemente 6a, 6b, 6c, sodass eine stehende Entnahme von Bäumen möglich ist.

Der Hauptarm 11 ist als Teleskoprohr ausgebildet, welches zwei Teilröhren 2, 3 mit rundem oder trapezförmigem Querschnitt ausbildet. Die Teilröhren 2 und 3 weisen einen unterschiedlichen Durchmesser auf, wobei die Teilröhre 2 einen größeren Durchmesser aufweist als die Teilröhre 3. Die Teilröhre 3 kann in der Art eines Teleskopes in die Teilröhre 2 eingeschoben bzw. herausgeschoben werden. Je nachdem, wie weit die Teilröhre 3 in die Teilröhre 2 geschoben wird, kann eine kleinere oder größere Länge des Auslegers 9 eingestellt werden. Die Teilröhre 3 ist an ihrem der Teilröhre 2 abgewandten Ende leicht gebogen ausgebildet und bildet an diesem Ende eine Befestigungsstelle für den Wipparm 12.

Auch der Wipparm 12 ist als eine Art Teleskoprohr ausgebildet, welches eine schwenkbar mit dem Hauptarm 11 verbundene Aufnahmehülse 4 umfasst, in welcher eine axial verschiebbare Gleitröhre 5 mit geringerem Durchmesser aufgenommen ist. Die Gleitröhre 5 ist länger ausgebildet als die Aufnahmehülse 4. Die Gleitröhre 5 kann an beiden Enden der Aufnahmehülse 4 aus dieser hinausgeschoben und in diese hineingeschoben werden.

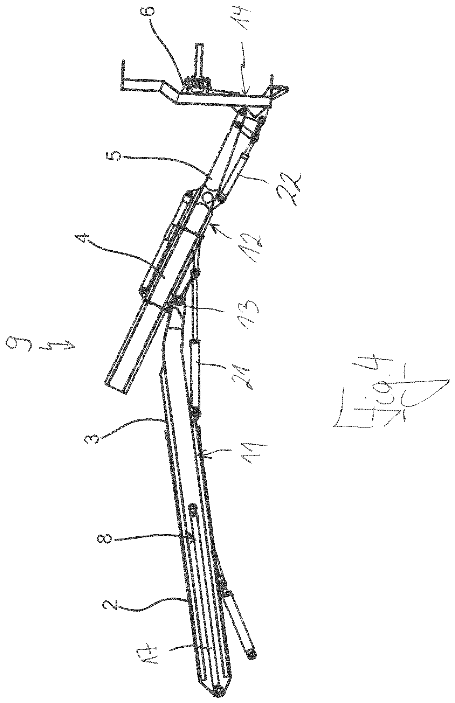

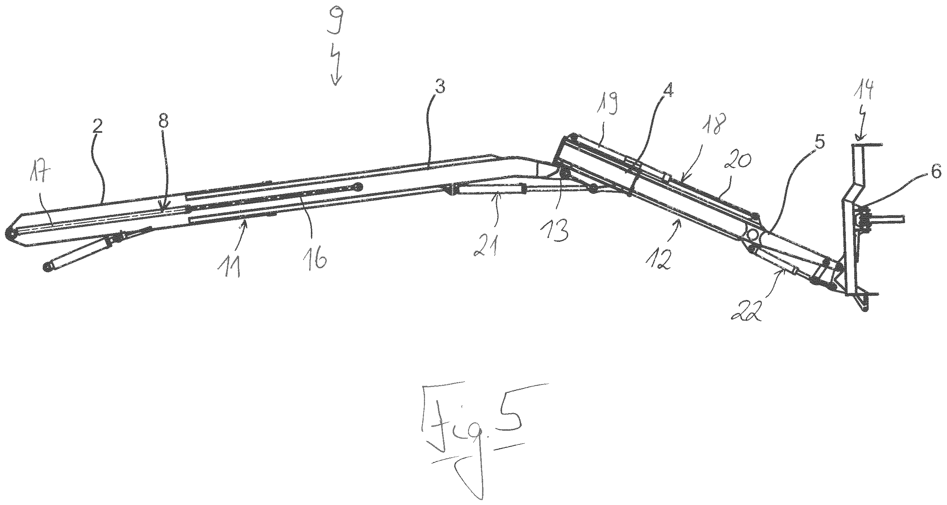

Wie insbesondere in den Figuren 4 und 5, welche den Ausleger 9 mit transparentem Hauptarm 11 zeigen, gut zu erkennen ist, ist im Inneren des Hauptarmes 11 ein Teleskopzylinder 8 vorgesehen. Die Zylinderstange 16 des Teleskopzylinders 8 ist an der Innenwand der Teilröhre 3 mit geringerem Durchmesser befestigt. Das Zylinderrohr 17 des Teleskopzylinders 8 ist an der Innenwand der Teilröhre 2 mit größerem Durchmesser befestigt. Mit Hilfe des Teleskopzylinders 8, welcher sich im Lumen des Hauptarms 11 befindet, ist es möglich, den Hauptarm 11 besonders stark zu verlängern, ohne dabei die Stabilität der Gesamtkonstruktion zu beeinträchtigen.

Auch die Bewegung der Gleitröhre 5 in der Aufnahmehülse 4 erfolgt mittels eines Antriebszylinders 18. Bei diesem Antriebszylinder 18 handelt es sich bei diesem Ausführungsbeispiel um einen Hydraulikzylinder. Selbstverständlich kann auch hier ein Teleskopzylinder oder Pneumatikzylinder eingesetzt werden. Im Gegensatz zum Teleskopzylinder 8, welcher sich im Inneren des Auslegers befindet, ist der Hydraulikzylinder 18 außen am Ausleger angeordnet. Hierbei ist das Zylinderrohr 19 des Hydraulikzylinders 18 an der Aufnahmehülse 4 angeordnet. Die Zylinderstange 20 ist an der Gleitröhre 5 befestigt.

Ein weiterer Hydraulikzylinder 21 ist zwischen dem Hauptarm 11 und dem Wipparm 12 angeordnet und dient insbesondere zum Verschwenken des Wipparms 12 am Hauptarm 11.

Ein weiterer Hydraulikzylinder 22 ist zwischen der Gleitröhre 5 des Wipparms 12 und einem Hebel 23, welcher ebenfalls an der Gleitröhre 5 angeordnet ist, befestigt. Der Hebel 23 ist mittels eines Verbindungselements 24 mit dem Baumfällwerkzeug 14 verbunden, wobei mittels des Zylinders 22 eine Verschwenkung des Baumfällwerkzeugs 14 um die Schwenkachse 25 bewerkstelligt wird.

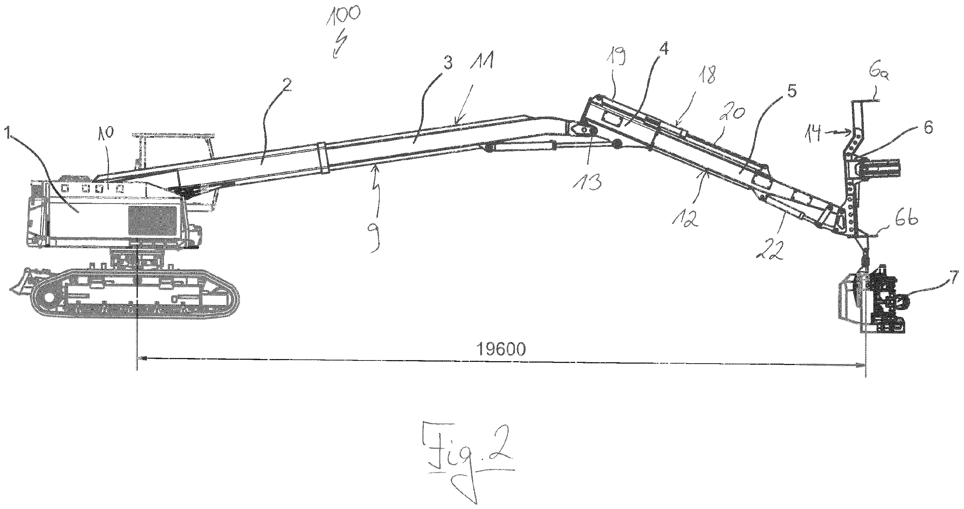

Figur 1 zeigt das erfindungsgemäße Fahrzeug 100 mit nur teilweise ausgefahrenem Hauptarm 11 und Wipparm 12. In dieser Stellung weist der Ausleger 9 eine Länge von 13,5 Metern auf. In der Figur 2 ist der Ausleger 9 dagegen im vollständig verlängerten Zustand mit vollständig ausgefahrenem Hauptarm 11 und vollständig ausgefahrenem Wipparm 12 dargestellt. In diesem Zustand weist der Ausleger 9 eine Länge von 19,6 Metern auf.

In den in den Figuren 1 und 2 dargestellten Situationen schließen die Längsachsen des Wipparms 12 und des Hauptarms 11 einen stumpfen Winkel ein. Hierbei ist der Hydraulikzylinder 21 vollständig ausgefahren.

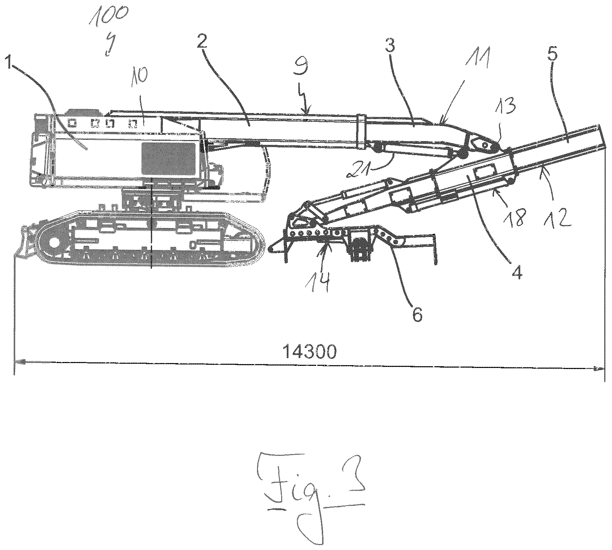

In der Figur 3 ist dagegen der Hydraulikzylinder 21 im vollständig eingefahrenen Zustand dargestellt. Dabei wurde der Wipparm 12 derart um die Schwenkachse 13 verschwenkt, dass nun die Längsachsen der Arme 11 und 12 einen spitzen Winkel einschließen. Das Baumfällwerkzeug 14 ist in dieser Stellung unterhalb des Hauptarms 11 positioniert. Die in der Figur 3 dargestellte Situation zeigt eine Ruhestellung, bei welcher keine Baumfällarbeiten durchgeführt werden. In der hier gezeigten Stellung des Auslegers 9 fährt das Fahrzeug 100 in der Regel von einem Ort zum nächsten, ohne dabei Bäume zu fällen.

## Patentansprüche

1. Arbeitsfahrzeug zum Fällen von Bäumen mit einem Fahrzeughauptkörper (1) sowie einem am Fahrzeughauptkörper (1) schwenkbar befestigten Ausleger (9), wobei der Ausleger (9) einen am Fahrzeughauptkörper (1) befestigten Hauptarm (11) sowie einen am Hauptarm (11) schwenkbar gelagerten Wipparm (12) aufweist, an dessen freiem Ende ein Baumfällwerkzeug (14) angeordnet ist, wobei sowohl der Hauptarm (11) als auch der Wipparm (12) teleskopartig verlängerbar ausgebildet sind.

2. Arbeitsfahrzeug nach Anspruch 1, **dadurch gekennzeichnet, dass** sich der Ausleger (9) im vollständig verlängerten Zustand des Hauptarmes (11) und des Wipparmes (12) über eine Gesamtlänge von mindestens 16 m, insbesondere von ca. 20 m, erstreckt.

3. Arbeitsfahrzeug nach einem der Ansprüche 1 oder 2, **dadurch gekennzeichnet, dass** das Baumfällwerkzeug (14) eine Baumhaltevorrichtung (6) sowie eine Schneidvorrichtung (15) umfasst, wobei die Schneidvorrichtung (15) vorzugsweise unterhalb der Baumhaltevorrichtung (6) angeordnet ist und wobei die Baumhaltevorrichtung (6) vorzugsweise drei übereinander angeordnete Haltelemente (6a, 6b, 6c) umfasst, so dass eine stehende Entnahme von Bäumen möglich ist.

4. Arbeitsfahrzeug nach einem der vorhergehenden Ansprüche, **dadurch gekennzeichnet, dass** der Hauptarm (11) als Teleskoprohr ausgebildet ist, welches mindestens zwei Teilröhren (2, 3) umfasst, welche einen unterschiedlichen Durchmesser aufweisen, wobei die Teilröhre (3) mit dem geringeren Durchmesser aus der Teilröhre (2) mit größerem Durchmesser ausgefahren sowie in diese Teilröhre eingefahren werden kann.

5. Arbeitsfahrzeug nach Anspruch 4, **dadurch gekennzeichnet, dass** die Teilröhre (3) mit geringerem Durchmesser mittels eines Betätigungselements, insbesondere eines Pneumatik- oder Hydraulikzylinders, vorzugsweise eines Teleskopzylinders (8) bewegbar ist, wobei eine Zylinderstange (16) des Betätigungselements (8) vorzugsweise an der Innenwand der Teilröhre (3) mit geringerem Durchmesser befestigt ist und ein Zylinderrohr (19) des Betätigungselements (8) vorzugsweise an der Innenwand der Teilröhre (2) mit größerem Durchmesser befestigt ist.

6. Arbeitsfahrzeug nach einem der vorhergehenden Ansprüche, **dadurch gekennzeichnet, dass** der Wipparm (12) eine schwenkbar mit dem Hauptarm (11) verbundene Aufnahmehülse (4) umfasst, in welcher eine axial verschiebbare Gleitröhre (5) mit geringerem Durchmesser aufgenommen ist, wobei die Gleitröhre (5) vorzugsweise länger ausgebildet ist als die Aufnahmehülse (4).

7. Arbeitsfahrzeug nach Anspruch 6, **dadurch gekennzeichnet, dass** die Gleitröhre (5) an beiden Enden der Aufnahmehülse (4) aus dieser hinausgeschoben und in diese hineingeschoben werden kann.

8. Arbeitsfahrzeug nach einem der Ansprüche 6 oder 7, **dadurch gekennzeichnet, dass** eine Bewegung der Gleitröhre (5) mittels eines Betätigungselements, insbesondere mittels eines Pneumatik- oder Hydraulikzylinders (18) erfolgt, welcher vorzugsweise außen an der Gleitröhre (5) und der Aufnahmehülse (4) befestigt ist, wobei vorzugsweise ein Zylinderrohr (19) des Betätigungselements (18) an der Aufnahmehülse (4) und eine Zylinderstange (20) an der Gleitröhre (5) befestigt ist.
